# EUROPEAN PATENT APPLICATION

(11) **EP 4 711 307 A2**
(43) Date of publication of application: **18.03.2026**
(21) Application number: 25201242.2
(22) Date of filing: 09.09.2025
(51) Int. Cl.: B65G 13/06, B65G 43/10, B65G 47/26

(54) **CONVEYOR MOTOR WITH NETWORK CONTROL FEATURE**

(30) Priority: 17.09.2024 US 202463695643 P; 05.09.2025 US 202519320204
(71) Applicant: Milwaukee Electronics Corporation, Milwaukee WI 53209 (US)
(72) Inventor: ROCHWERGER, Richard S., Granbury, TX, 76048 (US); IHNEN, Matt, SAUKVILLE, WI, 53080 (US); ALLEN, Michael C., Waukesha, WI, 53188 (US); CASTILLO, Luis Urbano Jimenez, 21430 Tecate (MX)
(74) Representative: Forresters IP LLP

(57) **Abstract**

A zone conveyor system (10) includes a series of conveyor zones (Z1, Z2, Z3). An integrated network motor (20) is provided for each zone (Z1, Z2, Z3), and includes a motor control arrangement and a zone control arrangement. The motor control arrangement controls operation of the integrated network motor in response to inputs from the zone control arrangement, and the zone control arrangement is configured to communicate with other zones, to provide outputs to the motor control arrangement for controlling the flow of items through the zone. A master controller (GC) is interconnected with the zone control arrangement of each integrated network motor (20), for controlling the flow of items through the conveyor system. A network cable (22) extends between and interconnects the integrated network motors (20) of adjacent zones. The network cable (22) is operable to enable communication of each zone with the master controller (GC), and to also enable communication between the integrated network motors (20) of adjacent zones.

## Description

### CROSS REFERENCE TO RELATED APPLICATIONS

This application claims the benefit of United States provisional patent application serial no. 63/695,643 filed September 17, 2024, the entire contents of which are hereby incorporated by reference.

### BACKGROUND AND SUMMARY

This invention relates to conveyor systems, and more particularly to a zone-type roller conveyor system in which each zone includes a series of rollers driven by a motor.

In a zone-type roller conveyor system, a series of idler rollers are typically driven by a drive roller. In one form, the drive roller may be a motor that is integrated into a roller, with the motorized roller being drivingly interconnected with the remaining rollers in the zone, such as via a series of drive belts. In another form, the driving force for a zone may be a drive motor that is separate from the rollers, and which is typically mounted to or otherwise interconnected with the conveyor frame. The drive motor includes an output shaft, which imparts rotation to one or more driven rollers such as via a drive belt. The remaining rollers in the zone are drivingly interconnected with the one or more driven rollers, such as via a series of drive belts. An example of the latter drive system is shown and described in Hall US patent 7,537,107, the entire contents of which are hereby incorporated by reference. In an alternative arrangement, the motor may be directly coupled to a driven roller without a drive belt, with the driven roller being drivingly engaged with other rollers via drive belts or the like.

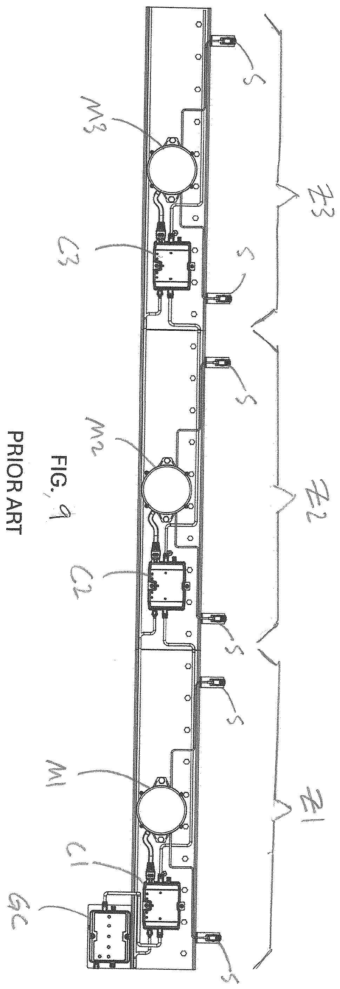

In a zone conveyor system as described above, each zone is typically provided with sensors that detect the presence of absence of an item in the zone, as well as a zone controller that is interconnected with the sensors and with the drive motor. Fig. 9 shows a series of zones Z1, Z2 and Z3 that may be incorporated in such system. Each of zones Z1, Z2 and Z3 includes a frame to which a series of rollers are mounted, and motors such as M1, M2 and M3 that are supported by the frame of respective zones Z1, Z2 and Z3. Each of zones Z1, Z2 and Z3 also includes a zone controller, shown at C1, C2 and C3, respectively, that is supported by the frame of the respective zone. Each of zone controllers C1, C2 and C3 is a component separate from respective motor M1, M2 and M3, and is typically mounted to the frame in the vicinity of the motor. A cable is connected between each sensor, shown at S, and the zone controller of each zone to provide input signals to the zone controller. A cable is also connected between the zone controller and the motor of each zone for controlling operation of the motor. Each zone controller is also interconnected with a master gateway controller that is programmed to control the flow of items throughout the conveyor system.

The present invention improves on existing technology as described above by eliminating the need for a separate zone controller for each zone in a zone conveyor system.

In accordance with an embodiment of the present invention, a zone-type conveyor system includes a plurality of conveyor zones that are adapted for use in conveying items in an upstream-to-downstream direction. Each conveyor zone includes a support structure and a series of rollers rotatably supported by the support structure. An integrated network motor is associated with each conveyor zone. Each integrated network motor includes a rotatable motor output member that is drivingly interconnected with one or more driven rollers for imparting rotation to the driven roller in response to operation of the integrated network motor. Each integrated network motor further includes a motor control arrangement and a zone control arrangement. The motor control arrangement is configured to control operation of the integrated network motor in response to inputs from the zone control arrangement, and the zone control arrangement is configured to communicate with and receive signals from one more other zones in the conveyor system and to provide outputs to the motor control arrangement in response thereto, for controlling operation of the integrated network motor and thereby the flow of items through the zone.

A master or gateway controller is interconnected with the zone control arrangement of each integrated network motor. The master controller interfaces with the zone control arrangement of each integrated network motor, for controlling the flow of items through the conveyor system. Representatively, a network cable extends between and interconnects the integrated network motors of adjacent zones. The network cable is operable to enable communication of each zone with the master controller, and to also enable communication between the integrated network motors of other zones.

Each zone includes at least one sensor. The at least one sensor may be configured to detect the presence or absence of an item in the zone, and/or to detect the direction of movement of an item into and out of the zone. The at least one sensor is interconnected with and provides inputs to the zone control arrangement of the integrated network motor. Each zone may include a pair of sensors that provide inputs to the zone control arrangement of the integrated network motor. A first one of the sensors may be configured to detect the entry of an item into the zone, and a second one of the sensors may be configured to detect that an item has exited the zone.

The integrated network motor may include a housing within which the motor control arrangement and the zone control arrangement are contained. A printed circuit board is located within the integrated network motor housing, and contains the motor control arrangement and the zone control arrangement.

An embodiment of the present invention also contemplates an integrated network motor for use in a zone-type conveyor system having a plurality of conveyor zones, each of which includes a support structure and a series of rollers rotatably supported by the support structure. The integrated network motor includes a rotatable motor output member that adapted to be drivingly interconnected with one or more driven rollers and to impart rotation to the driven roller in response to operation of the integrated network motor. The integrated network motor includes a motor control arrangement that is configured to control operation of the integrated network motor and thereby rotation of the motor output member, and a zone control arrangement. The motor control arrangement is configured to control operation of the integrated network motor in response to inputs from the zone control arrangement. The zone control arrangement is adapted to communicate with and receive signals from one more other zones in the conveyor system and to provide outputs to the motor control arrangement in response thereto, for controlling operation of the integrated network motor and thereby the flow of items through the zone.

An embodiment of the present invention further contemplates a conveyor assembly that includes a support structure and a series of rollers rotatably supported by the support structure. An integrated network motor is interconnected with the support structure. The integrated network motor includes a rotatable motor output member that is drivingly interconnected with one or more driven rollers for imparting rotation to the driven roller in response to operation of the integrated network motor. The integrated network motor includes a board having a network interface, a motor control arrangement and a zone control arrangement. The motor control arrangement is configured to control operation of the integrated network motor in response to inputs from the zone control arrangement. The zone control arrangement is configured to receive inputs via the network interface and to provide outputs to the motor control arrangement in response thereto for controlling operation of the integrated network motor.

Other aspects, features and advantages of the invention will become apparent to those skilled in the art from the following detailed description and accompanying drawings. It should be understood, however, that the detailed description and specific examples, while indicating certain embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

A clear conception of the advantages and features constituting the present invention, and the construction and operation of typical mechanisms provided with the present invention, will become more readily apparent by referring to the exemplary, and therefore non-limiting, embodiments illustrated in the drawings accompanying and forming a part of this specification, wherein like reference numerals designate the same elements can be several views, and in which:
Fig. 1 is a schematic view of a section of a zone-type conveyor system in accordance with an embodiment of the present invention;
Fig. 2 is a side elevation view of the section of the zone-type conveyor system of Fig. 1;
Fig. 3 is an isometric view of an integrated network motor incorporated into the zone-type conveyor system of Fig. 1;
Fig. 4 is an exploded isometric view of the integrated network motor of Figs. 2 and 3;
Fig. 5 is a cross-sectional view of the integrated network motor of Figs. 3 and 4;
Fig. 6 is an elevation view of the integrated network motor of Fig. 3;
Fig. 7 is a block diagram of a board incorporated into the integrated network motor of Figs. 3-6;
Fig. 8 is a view illustrating a master controller incorporated into a zone-type conveyor system in accordance with an embodiment of the present invention; and
Fig. 9 is a schematic view of a prior art zone-type conveyor system.

In describing the representative embodiment of the invention that is illustrated in the drawings, specific terminology will be resorted to for the sake of clarity. However, it is not intended that the invention be limited to the specific terms so selected, and it is to be understood that each specific term includes all technical equivalents, which operate in a similar manner to accomplish a similar purpose. For example, the words "connected," "attached," or terms similar thereto are often used. They are not limited to direct connection but include connection through other elements where such connection would be recognized as being equivalent by those skilled in the art.

### DETAILED DESCRIPTION

An embodiment of the present invention and the various features and advantageous details thereof are explained more fully with reference to the non-limiting embodiments described in detail in the following description.

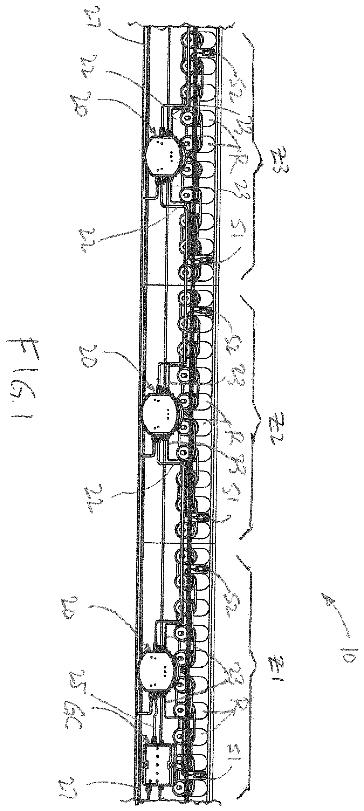

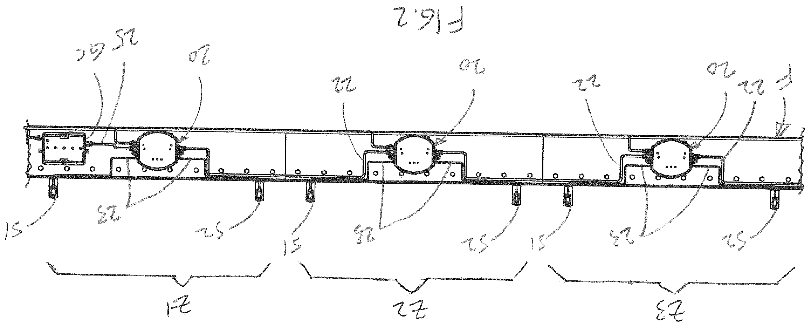

Figs. 1 and 2 illustrate a portion of a zone-type conveyor system 10 in accordance with an embodiment of the present invention. The conveyor system 10 includes a series of conveyor zones, three of which are representatively shown at Z1, Z2 and Z3. As is known, each zone includes a frame F supporting a series of rollers R, which are drivingly interconnected with each other such as by a series of belts. Alternatively, a conveyor belt may be positioned about the rollers in a zone, such that items are supported on an upper run of the belt and the rollers drive the belt to advance items through the zone. The conveyor system 10 may include any number and configuration of zones such as Z1, Z2 and Z3 for moving items from one location to another in a facility.

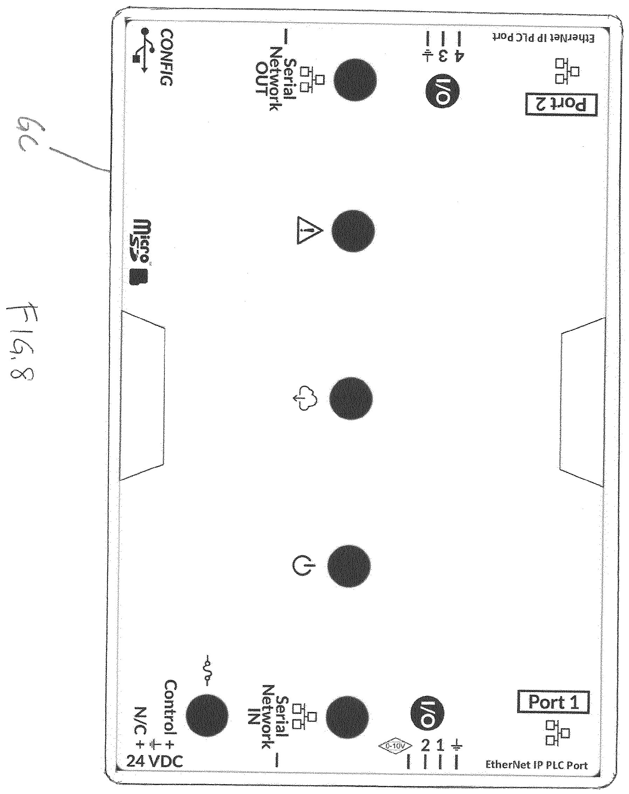

In accordance with an embodiment of the present invention, each zone in the conveyor system 10 is provided with an integrated network motor, shown at 20. As will be explained, each integrated network motor 20 is constructed so as to eliminate the need for a separate zone controller for each conveyor zone, as shown in Fig. 8 and described above. The integrated network motors 20 of adjacent zones are connected together via network cables 22.

Each of zones Z1, Z2 and Z3 also includes a means for sensing movement of items through the zone. In the illustrated embodiment, the means for sensing movement of items through a zone is in the form of one or more sensors. While a single sensor may be employed, the illustrated embodiment illustrates a pair of sensors, shown at S1, S2. The sensors S1, S2 provide inputs to the integrated network motor 20 that are used to control its operation, and thereby rotation of the rollers R within the zone. Each of the sensors S1, S2 may representatively be in the form of photoelectric sensor, which is blocked when an item is in line with the sensor and is otherwise unblocked. Various types of sensors other than photoelectric sensors may be employed as desired. The sensors S1, S2 of each zone are connected with the integrated network motor 20 of the zone via sensor cables 23.

The conveyor system 10 also includes a master gateway controller GC. The gateway controller GC is connected to one of the integrated network motors 20 of the conveyor system 10 via a network cable 25. A power conductor 27 extends along the conveyor system 10, and is connected to the gateway controller GC and each of the integrated network motors 20 for providing both motor power and control power thereto.

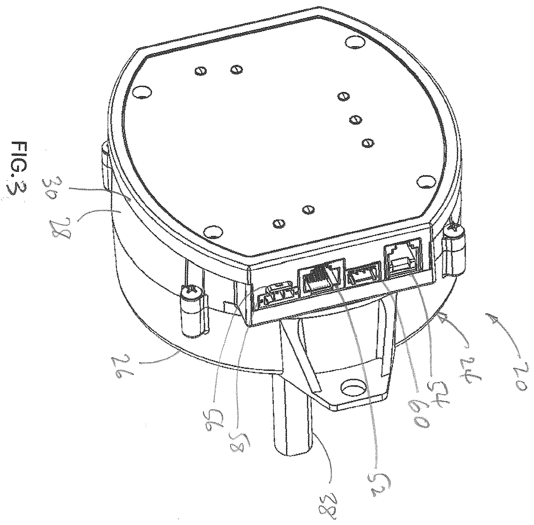

Figs. 3-5 show the integrated network motor 20 in accordance with an embodiment of the present invention. The integrated network motor 20 includes a housing 24 that contains various components to operate the zone within which the integrated network motor 20 is contained. The housing 24 consists of a first housing section 26 that is mountable to the conveyor frame of the zone such as Z1, Z2, Z3, and a second housing section 28 that is mountable to the first housing section 26. Alternatively, the housing 24 may have a one-piece construction as opposed to the two-piece construction as illustrated. The first housing section 26 may be mounted to a side rail of the conveyor frame beneath the plane in which the rollers are located. Alternatively, the integrated network motor 20 may be mounted to the conveyor frame side rail via engagement of the second housing section 28 with the side rail 20. If desired, the integrated network motor 20 may be secured to a mounting bracket that in turn is engaged with the conveyor frame side rail.

Various components described below are contained within the housing 24 of the integrated network motor 20 when the first housing section 26 is secured to the second housing section 28. A cover 30 is also mounted to the housing 24 to prevent access to the interior of the housing 24 and associated components until the cover 30 is removed. An overlay 32 may be installed on the cover 30 to provide various displays associated with connection and operation of the integrated network motor 20.

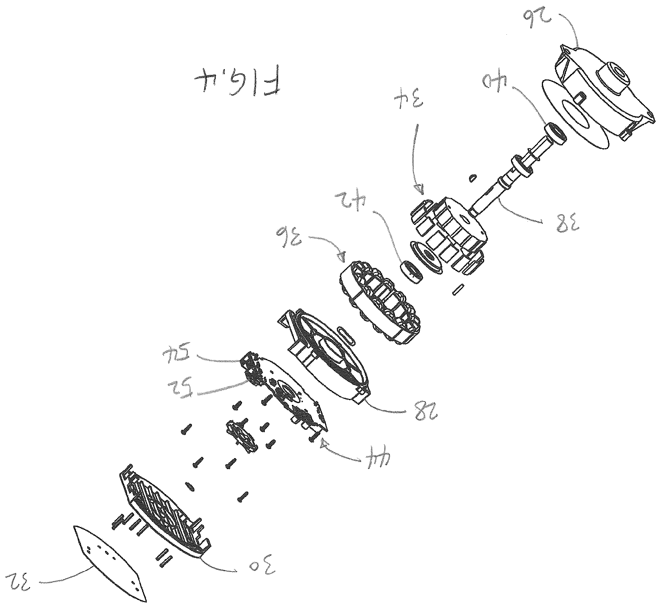

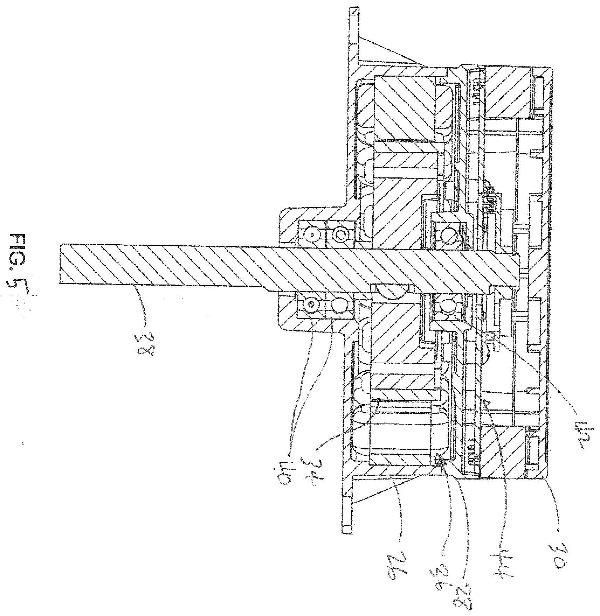

Turning to Figs. 4 and 5, the integrated network motor 10 includes motor components and an associated motor controller to drive the rollers of the conveyor system 10, such as a rotor and magnet assembly 34 and a stator assembly 36. The rotor and magnet assembly 34 and the stator assembly 36 operate together to drive an output shaft 38 that propels movement of rollers through a zone. The output shaft 38 is rotatably supported relative to housing 24 via a set of bearings 40 mounted within a passage defined by the first housing section 26, and a bearing 42 carried by second housing section 28.

A printed circuit board assembly 44 is contained within the housing 14. The printed circuit board (PCB) assembly 44 is secured to the second housing section 28, and includes conductors and a number of input/output interfaces, as will be explained.

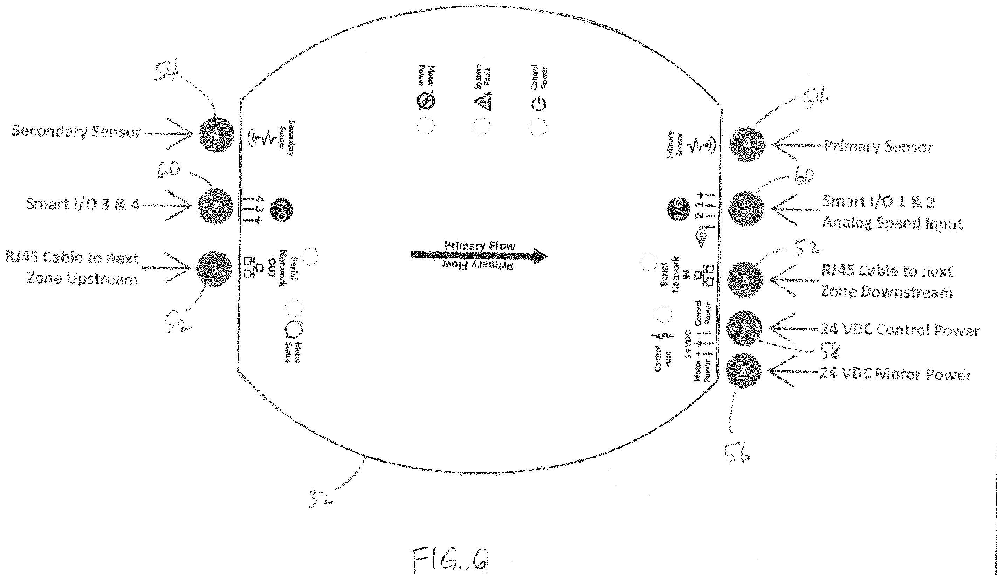

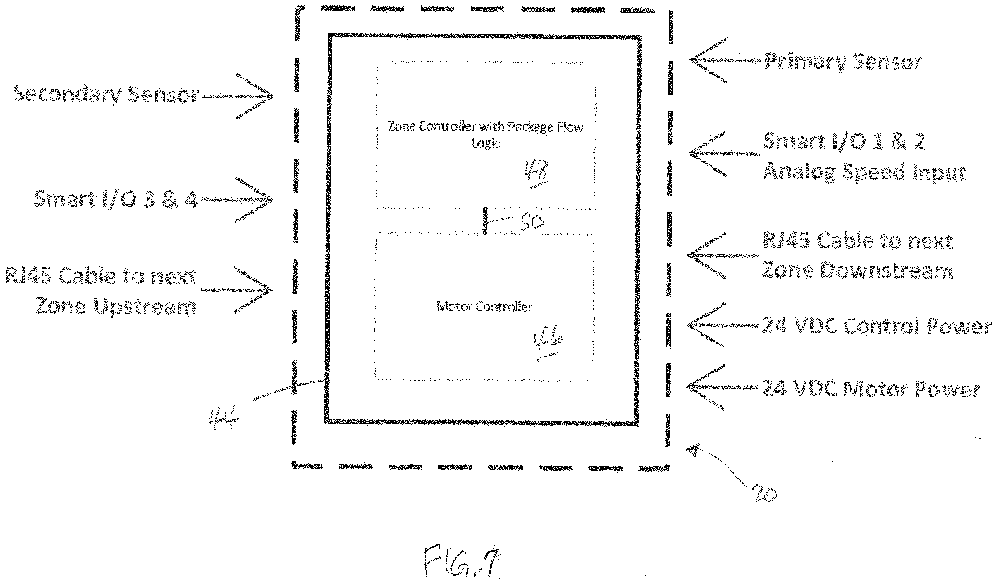

As shown in Figs. 6 and 7, the PCB assembly 44 includes a motor control module 46 and a zone control module 48. The motor control module 46 is interconnected with the stator assembly 36 in a manner as is known, for controlling rotation of magnet and rotor assembly 34 and thereby rotation of output shaft 38.

The zone control module 48 of PCB assembly 44 is interconnected with the motor control module 46 via a conductor 50, which enables control signals to be communicated from zone control module 48 to motor control module 46. In addition, PCB assembly 44 has various connectors that enable inputs and outputs to and from zone control module 48. The connectors of PCB assembly 44 include network interface connectors 52, each of which enables the zone control module 48 of PCB assembly 44 to be interconnected via network cables 22 with the zone control module associated with a motor, such as motor 20, that operates an adjacent zone. The connectors of PCB assembly 44 also include sensor input connectors 54 that provide inputs to zone control module 48 from the zone sensors such as S1, S2. The connections of PCB assembly 44 further include a motor power connector 56 and a control power connector 58 that are configured for interconnection with the power conductor 27, for supplying power to the motor control module 46 20 and the zone control 48 of motor 20. In addition, the connections of PCB assembly 44 include "smart I/O" connectors 60. The smart I/O connectors 60 are capable of being customized for different applications in which the conveyor system 10 may be employed. As one example, a smart I/O connector 60 may be used to receive input signals from a zone speed sensor and/or another external device. The smart I/O connectors 60 may be configured either as inputs or outputs, with various built-in functions. The smart I/O sensors may also be used as general purpose input/output interfaces as an extension of a programmable logic controller (PLC).

As noted above, the gateway controller GC (Fig. 8) is connected to one of the integrated network motors 40 via network cable 25 (Figs. 1,2), and thereby to the remainder of the integrated interconnected network motors 20 in the conveyor system via the network cables 27. The gateway controller GC has network interface connectors, motor power and control power connectors, and smart I/O connectors in the same manner as the connectors associated with the PCB assembly 44 of the zone control module 48 described above. The gateway controller GC may be configured to communicate package flow logic to the zone control modules 48 of the interconnected network motors 20 for controlling motor operation, and may provide real-time control of the various integrated network motors 20 via a programmable logic controller.

As described above, each zone of conveyor system 10 may be controlled by a single integrated network motor 20, without the need for a separate zone controller as in the prior art. Integrated network motors 10 provide a fully integrated product that includes motor functionality, as well as commutation, control, network, and associated logic, so that adjacent zones are connected to one another using a high-speed, real-time network.

Although the best mode contemplated by the inventor of carrying out the illustrated embodiment of the present invention is disclosed above, practice of the illustrated embodiment of the present invention is not limited thereto. It will be manifest that various additions, modifications and rearrangements of the aspects and features of the embodiment of present invention may be made in addition to those described above without deviating from the spirit and scope of the underlying inventive concept. The scope of some of these changes is discussed above. The scope of other changes to the described embodiments that fall within the present invention but that are not specifically discussed above will become apparent from the appended claims and other attachments. It is also understood that the embodiment of the invention disclosed and defined herein extends to all alternative combinations of two or more of the individual features mentioned or evident from the text and/or drawings. All of these different combinations constitute various alternative aspects of the present invention.

## Claims

1. A zone-type conveyor system, comprising:
a plurality of conveyor zones, wherein each conveyor zone includes a support structure and a series of rollers rotatably supported by the support structure;
an integrated network motor associated with each conveyor zone, wherein each integrated network motor includes a rotatable motor output member that is drivingly interconnected with one or more driven rollers for imparting rotation to the driven roller in response to operation of the integrated network motor;
wherein each integrated network motor further includes a motor control arrangement and a zone control arrangement, wherein the motor control arrangement is configured to control operation of the integrated network motor in response to inputs from the zone control arrangement, and wherein the zone control arrangement is configured to communicate with and receive signals from one more other zones in the conveyor system and from a gateway controller and to provide outputs to the motor control arrangement in response thereto for controlling operation of the integrated network motor and thereby the flow of items through the zone.

2. The zone-type conveyor system of claim 1, wherein each zone includes at least one sensor that is configured to detect the presence or absence of an item in the zone, and wherein the sensor is interconnected with and provides inputs to the zone control arrangement of the integrated network motor.

3. The zone-type conveyor system of claim 2, wherein each zone includes at least one sensor, wherein each sensor is configured to detect an aspect of movement of an item relative to the zone, and is interconnected with and provides inputs to the zone control arrangement of the integrated network motor.

4. The zone-type conveyor system of claim 2, wherein the integrated network motor includes a housing within which the motor control arrangement and the zone control arrangement are contained.

5. The zone-type conveyor system of claim 4, wherein a printed circuit board located within the integrated network motor housing contains the motor control arrangement and the zone control arrangement.

6. The zone-type conveyor system of claim 1, further comprising a master or gateway controller that is interconnected with the zone control arrangement of each integrated network motor, wherein each zone control arrangement is responsive to the master controller to control the flow of items through the zone within which the integrated network motor is located.

7. The zone-type conveyor system of claim 6, wherein the master controller is configured to program the zone control arrangement of each integrated network motor.

8. The zone-type conveyor system of claim 7, wherein a network cable extends between and interconnects the integrated network motors of adjacent zones, wherein the network cable is operable to enable communication of each zone with the master controller, and to enable communication between the integrated network motors of adjacent zones.

9. An integrated network motor for use in a zone-type conveyor system having a plurality of conveyor zones, wherein each conveyor zone includes a support structure and a series of rollers rotatably supported by the support structure, comprising: a rotatable motor output member that adapted to be drivingly interconnected with one or more driven rollers and to impart rotation to the driven roller in response to operation of the integrated network motor; a motor control arrangement configured to control operation of the integrated network motor and thereby rotation of the motor output member; and a zone control arrangement; wherein the motor control arrangement is configured to control operation of the integrated network motor in response to inputs from the zone control arrangement; and wherein the zone control arrangement is adapted to communicate with and receive signals from one more other zones in the conveyor system and to provide outputs to the motor control arrangement in response thereto for controlling operation of the integrated network motor and thereby the flow of items through the zone.

10. The integrated network motor of claim 9, wherein the integrated network motor includes a housing within which the motor control arrangement and the zone control arrangement are contained.

11. The integrated network motor of claim 10, wherein a printed circuit board located within the integrated network motor housing contains the motor control arrangement and the zone control arrangement.

12. The integrated network motor of claim 10, wherein the integrated network motor contains a network interface that enables the zone controller to communicate with and be configurable by a master controller to control the flow of items through the zone within which the integrated network motor is located.

13. A conveyor assembly, comprising:
a support structure;
a series of rollers rotatably supported by the support structure; and
an integrated network motor interconnected with the support structure, wherein each integrated network motor includes a rotatable motor output member that is drivingly interconnected with one or more driven rollers for imparting rotation to the driven roller in response to operation of the integrated network motor;
wherein the integrated network motor includes a board having a network interface, a motor control arrangement and a zone control arrangement, wherein the motor control arrangement is configured to control operation of the integrated network motor in response to inputs from the zone control arrangement, and wherein the zone control arrangement is configured to receive inputs via the network interface and to provide outputs to the motor control arrangement in response thereto for controlling operation of the integrated network motor.

14. The conveyor assembly of claim 13, further comprising one or more sensors that are configured to detect the presence or absence of an item on the rollers, and wherein the sensor is interconnected with and provides inputs to the zone control arrangement of the integrated network motor.

15. The conveyor assembly of claim 13, wherein the integrated network motor includes a housing within which the board containing the network interface, the motor control arrangement and the zone control arrangement are contained.
